# EUROPEAN PATENT APPLICATION

(11) **EP 3 705 628 A1**
(43) Date of publication of application: **09.09.2020**
(21) Application number: 19160824.9
(22) Date of filing: 05.03.2019
(51) Int. Cl.: E02B 17/02

(54) **OFFSHORE SUBSTATION TOPSIDE**

(71) Applicant: Ørsted Wind Power A/S, 7000 Fredericia (DK)
(72) Inventor: Hospers, Alexander, 2820 Gentofte (DK); Carlsen, Tommy, 2820 Gentofte (DK)
(74) Representative: AWA Denmark A/S

(57) **Abstract**

Disclosed is a method of manufacturing an offshore substation topside for assisting in transporting electricity generated by an offshore wind farm arranged at a first location to land. The offshore substation topside comprising a first deck and a first block arranged on the first deck, wherein the first block comprises a plurality of modules including a first module and a second module, each module of the plurality of modules comprises one or more standardized sections selected from a group of standardized section, each standardized section comprises a self-supporting frame. The first module of the plurality of modules is manufactured at a second location, the first module and the second module of the plurality of modules having at least one standardized section in common, and the plurality of modules being assembled into the first block at a location remote from the second location.

## Description

### Field

The present invention relates to a method of manufacturing an offshore substation topside and to an offshore substation topside

### Background

Wind power has been proven as a highly effective way of producing renewable energy. However due to the high population density of many parts of the developed world there is a limit to the number of wind turbines which may be erected on land.

Much attention has therefore been devoted to offshore wind farms, as they may effectively utilize the vast sea areas that are difficult to use for alternative purposes. It is however a complicated process not only to produce wind electricity offshore but also to transport the generated electricity towards land.

A central part of an offshore wind farm is the offshore substation. The offshore substation receives the electricity generated by the wind turbines and increases the voltage before delivering the electricity to export cables.

The offshore substation topside is typically arranged on an offshore support structure such as a multi-legged fixed bottom structure e.g. a jacket. Traditionally, offshore substation topsides are manufactured in one piece and lifted onto the offshore support structure by a heavy lifting vessel.

The offshore substation topside must be designed to the specific needs of the specific offshore wind farm where it is to be used. The design and manufacture of an offshore substation topside is therefore a very time consuming and costly process that may take years to complete.

It has become clear as a result of the global effort to reduce CO₂ emissions that new offshore wind farms must be put into services at a significantly higher pace than previously.

There is therefore a need for a simpler and faster method of manufacturing an offshore substation topside.

### Summary

According to a first aspect, the invention relates to a method of manufacturing an offshore substation topside for assisting in transporting electricity generated by an offshore wind farm to land, the offshore wind turbine farm being arranged at a first location, the offshore substation topside being supported by an offshore support structure and comprising a first set of gas insulated switch gears, GIS, a second set of GIS, and a transformer, wherein the first set of GIS are adapted to receive AC current generated by at least a part of the wind turbines of the offshore wind farm and deliver the AC current to the transformer, the transformer being configured to increase the voltage of the AC current generated by the at least part of the wind turbine and deliver the AC current with the increased voltage to the second set of GIS, the second set of GIS being configured to provide the AC current with the increased voltage to one or more export cables for transporting the AC current towards the shore, wherein the offshore substation topside further comprises a first deck and a first block arranged on the first deck, wherein the first block comprises a plurality of modules including a first module and a second module, each module of the plurality of modules comprises one or more standardized sections selected from a group of standardized section, each standardized section comprises a self-supporting frame, and wherein the first module of the plurality of modules is manufactured at a second location, the first module and the second module of the plurality of modules having at least one standardized section in common, and the plurality of modules being assembled into the first block at a location remote from the second location.

Consequently, by using standardized sections where productions and assembly is distributed between a plurality of locations a simple and efficient way of manufacturing an offshore substation topside is provided.

The offshore support structure may be multi-legged fixed bottom structure e.g. a jacket, a monopile, a compliant tower, a gravity structure or a floating structure for an offshore structure such as a TLP (tension leg platform), a Semi-Submersible, a spar platform or a tri-pile. An offshore wind farm may comprise more than one offshore substation. Preferably, the first block comprises more than two modules e.g. at least 4, or 6 modules. The standardized sections may be welded, bolted or stabbed together to form a module. Correspondingly, the modules e.g. the first module and the second module may be welded, bolted or stabbed together to form the first block. The group of standardized sections may comprise a first subgroup of standardized sections having a first height and a second group of standardized section having a second height. The group of standardized sections may further comprise a third subgroup of standardized sections having a third height. The first height may be higher than the second height, and the second height may be higher than the third height. As an example the first height may be between 5.8 and 6.7 meter e.g. 6.2 meter, the second height may be between 4.7 and 5.7 meter e.g. 5.2 meter, and the third height may be between 3.5 and 4.5 meter e.g. 4.0 meter. The first group of standardized sections may be adapted for forming modules suitable for housing high voltage, HV GIS e.g. GIS capable of handling voltages at or above 120 kV. The second group of standardized sections may be adapted for forming modules suitable for housing medium voltage, MV GIS e.g. GIS capable of handling voltages between 20 and 120 kV. The third group of standardized sections may be adapted for forming modules suitable for housing low voltage distribution systems, and LV equipment such as SCADA equipment.

In some embodiments the offshore substation topside further comprises a second block arranged on the first deck, wherein the first block comprises a first group of modules comprising standardized sections selected from a first subgroup of standardized sections, the second block comprises a second group of modules comprising standardized section selected from a second subgroup of standardized sections, and wherein the first set of GIS are being arranged inside the second group of modules of the second block and the second set of GIS are being arranged inside the first group of modules of the first block.

This allows the offshore substation topside to efficiently be adapted to a specific offshore wind farm.

In some embodiments the first module is arranged adjacent to the second module.

In some embodiments the first block further comprises a first standardized interface module configured to interface with a group of central systems and thereby provide connectivity for subsystems of the plurality of modules to the central systems.

Consequently, by using a standardized interface module an effective way of providing connectivity to central system is provided. The use of standardized interface modules may further allow the standardized sections to be even further standardized as they to a lesser degree need to be adapted for connecting to central systems of the offshore substation topside.

In some embodiments, the central systems comprise a ventilation system for providing ventilation, an electrical system for providing electricity to equipment in the plurality of modules and / or fire extinguishing system.

In some embodiment the first module and the second module each comprises a ventilation subsystem for providing ventilation to the modules, the ventilation subsystem comprises a main ventilation tube extending along a first common central axis, the main ventilation tube of the ventilation subsystem of the first module having an inlet and an outlet, the main ventilation tube of the ventilation subsystem of the second module having an inlet, and wherein the inlet of the main ventilation tube of the ventilation subsystem of the second module is being connected to the outlet of the main ventilation tube of the ventilation subsystem of the first module when the plurality of modules is being assembled into the first block.

Consequently, by providing the individual modules with ventilation subsystems that are adapted to be connected, the process of assembling a block may be further streamlined.

The main ventilation tubes of the individual modules may be connected to each other using matching flanges or bellow connectors. The ventilation subsystem of a module may further comprise one or more ventilation outlets for ventilating the module.

In some embodiments the first module is being arranged adjacent to the first standardized interface module, the first standardized interface module comprising a main ventilation tube having an inlet connected to a ventilation tube of a central ventilation system of the offshore substation and an outlet and wherein the outlet is being connected to the inlet of the main ventilation tube of the ventilation subsystem of the first module when the plurality of modules is being assembled into the first block.

In some embodiments prior to assembly of the first module and the second module, the ventilation subsystem of the first module is tested at the first location and the ventilation subsystem of the second module is tested at another location different from the first location.

Consequently, by testing the ventilation subsystems at different location (preferably where the modules are built) the risk of errors of the ventilation subsystem of the first block may be lowered. This will further reduce the risk of any delays when assembling the first block.

In some embodiments the first standardized interface module is arranged centrally on the first deck.

In some embodiments the first module and the second module comprise an electrical subsystem for providing electricity to equipment arranged in the modules, the electrical subsystem of the first module comprises a first main electrical connector and a second main electrical connector, the electrical subsystem of the second module comprises a first main electrical connector, wherein first main electrical connector and the second main electrical connector of the first module and the first main electrical connector of the second module are arranged along a second common central axis and the second main electrical connector of the first module is being connected electrically to the first main electrical connector of the second module when the plurality of modules is being assembled into the first block. Consequently, by providing the individual modules with electrical subsystems that are adapted to be connected the process of assembling a block may be further streamlined.

The electrical subsystems are configured to provide equipment within the individual modules with power such as lightning equipment, computer equipment and the like. Preferably all modules of the first block comprise an electrical subsystem e.g. at least 4 or 6 modules of the first block.

In some embodiments the electrical subsystem of the second module further comprises a second main electrical connector arranged along the second common central axis.

In some embodiments the first standardized interface module comprises an electrical subsystem connected to a main electrical system of the offshore substation, the electrical subsystem of the first standardized interface module comprises a first main electrical connector being connected to first electrical connector of the electrical subsystem of the first module when the plurality of modules is being assembled into the first block.

Consequently, by using a standardized interface module to provide electricity to the electrical subsystems of the modules, the electrical subsystems of the modules may be designed without the need of adapting them to the specific main electrical system of the offshore substation.

In some embodiments prior to assembly of the first module and the second module, the electrical subsystem of the first module is tested at the first location and the electrical subsystem of the second module is tested at another location different from the first location.

This allows for failures in the electrical subsystems of the modules to be detected before they are assembled into the first block.

In some embodiment the first module and the second module each comprises a fire extinguishing subsystem for extinguishing fires in the modules, the fire extinguishing subsystem comprises a fire pipe for transporting a fire extinguishing fluid, the fire pipe extending along a fifth common central axis, the fire pipe of the fire extinguishing subsystem of the first module having an inlet and an outlet, the fire pipe of the fire extinguishing subsystem of the second module having an inlet, and wherein the inlet of the fire pipe of the fire extinguishing subsystem of the second module is being connected to the outlet of the fire pipe of the fire extinguishing subsystem of the first module when the plurality of modules is being assembled into the first block.

Consequently, by providing the individual modules with fire extinguishing subsystems that are adapted to be connected, the process of assembling a block may be further streamlined.

All modules of a block may be provided with fire extinguishing subsystems. The fire extinguishing subsystems of the individual modules may further comprise one or more fire extinguishing sprinkler. The fire extinguishing subsystems of the individual modules may further comprise one or more fire detectors either arranged together with a fire extinguishing sprinkler or as an individual unit. The fire extinguishing fluid may be any fluid suitable for extinguishing fires e.g. halogen or water. The fire pipes of the individual modules may be connected to each other using matching flanges or bellow connectors.

In some embodiments, the first standardized interface module comprises a fire pipe fluidly connected to a tank of fire extinguishing fluid of the offshore substation topside, the fire pipe having an outlet, and wherein the outlet is being connected to the inlet of the fire pipe of the first module when the plurality of modules is being assembled into the first block.

In some embodiments the fire extinguishing subsystem of the first module and the second module each comprises a fire detector communicatively coupled to a central fire control unit, wherein the fire control unit is configured to, responsive to a fire detected by one or more fire detectors, take an action to extinguish the fire and / or prevent it from spreading.

The central fire control unit may be configured to stop at least a part of the ventilation system, activate fire sprinklers, and / or close fire doors between the individual modules. Preferably all modules of the first block comprise a fire detector communicatively coupled to the central fire control unit. The fire detectors may be wired or wireless communicatively coupled to the central fire control unit.

In some embodiments prior to assembly of the first module and the second module, the fire extinguishing subsystem of the first module is tested at the first location and the fire extinguishing subsystem of the second module is tested at another location different from the first location.

Consequently, by testing the fire extinguishing subsystems at different location (preferably where the modules are built) the risk of errors of the fire extinguishing subsystem of the first block may be lowered. This will further reduce the risk of any delays when assembling the first block.

In some embodiments the ventilation subsystem of the first module and second module each comprises a valve communicatively coupled to the central fire control unit, and wherein the central fire control unit is further configured to detect the location of a fire and responsive to the detected location close valves of one or more ventilation subsystems to stop ventilation of modules being in fire.

Consequently, at least some of the modules not being in fire may still be ventilated. This may be important since it may take some time to put the offshore substation topside in an emergency state. Thus by ventilating at least some of the non-affected modules the equipment in those modules may be protected from damage.

All ventilation subsystems may be provided with a valve communicatively coupled to the central fire control unit. The valve is preferably arranged down stream of any ventilation outlets and thereby configured to close of ventilation for modules arranged downstream.

In some embodiments the plurality of module of the first block further comprises a third module and a fourth module, the third and the fourth module each having at least one standardized section in common, and wherein the third module is arranged on top of the first module, and the fourth module is arranged on top of the second module, the self-supporting frames of the standardized sections of first module being further configured to support the weight of the third module, and the self-supporting frames of the standardized sections of the second module being further configured to carry the weight of the fourth module.

In some embodiments the first block further comprises a second standardized interface module, the second standardized interface module being arranged on top of the first standardized interface module and being configured to interface with the first standardized interface module.

In some embodiments the third module and the fourth module each comprises a ventilation subsystem with a main ventilation tube extending a long a third common central axis, the main ventilation tube of the ventilation subsystem of the third module having an inlet and an outlet, the main ventilation tube of the ventilation subsystem of the fourth module having an inlet, and wherein the inlet of the main ventilation tube of the ventilation subsystem of the fourth module is being connected to the outlet of the main ventilation tube of the ventilation subsystem of the third module when the plurality of modules is being assembled into the first block.

In some embodiments the main ventilation tube of the first standardized interface module further comprises a second outlet, and wherein the second standardized interface module comprises a main ventilation tube having an inlet and an outlet, the inlet being connected to the second outlet of the main ventilation tube of the first standardized interface module and the outlet being connected to the inlet of the main ventilation tube of the ventilation subsystem of the third module when the plurality of modules is being assembled into the first block.

In some embodiments the first common central axis is parallel with the third common central axis.

In some embodiments the third module and the fourth module comprises an electrical subsystem for providing electricity to equipment arranged in the modules, the electrical subsystem of the third module comprising a first main electrical connector and a second main electrical connector, the electrical subsystem of the fourth module comprises a first main electrical connector, wherein the first main electrical connector and the second main electrical connector of the third module and the first main electrical connector of the fourth module are arranged along a fourth common central axis and the second main electrical connector of the third module is being connected electrically to the first main electrical connector of the fourth module when the plurality of modules of is being assembled into the first block.

In some embodiments the electrical subsystem of the first standardized interface module comprises a second main electrical connector, the second standardized interface module comprises an electrical subsystem comprising a first main electrical connector and a second main electrical connector, the first main electrical connector being connected to the second main electrical connector of the electrical subsystem of the first standardized interface module, and the second main electrical connector being connected to the first main electrical connector of the third module when the plurality of modules is being assembled into the first block.

In some embodiments the offshore substation topside further comprises a second block arranged opposite to the first block, wherein the second block comprises a plurality of modules including a first module and a second module, each module of the plurality of modules comprises one or more standardized sections.

In some embodiments the plurality of modules is being assembled into the first block at a location more proximal to the first location than the second location.

Consequently, by assembling the plurality of modules into the first block close to the first location (being the location of the offshore wind farm) transportation time of the first block may be reduced. This may furthermore reduce the risk that the first block becomes damaged during transportation.

In some embodiments the first deck is arranged on the offshore support structure before the first block is arranged on the first deck.

In some embodiments the plurality of modules is being transported by one or more ships to the offshore support structure and assembled into the first block offshore on the first deck at the offshore support structure.

Consequently, by assembling the first block offshore at the offshore support structure, even a large offshore substation may be constructed with only the assistance of smaller lifting vessels. This may be especially important when offshore wind farms are being built far from land or at a location where there is no nearby heavy lifting vessel. By providing the modules with subsystems that may be tested onshore, the offshore assembly time may be lowered. This may be important since offshore work is more complicate, dangerous and expensive than onshore work.
The plurality of modules may be raised onto the first deck one by one using a crane of a crane vessel.

According to a second aspect the invention relates to an offshore substation topside for assisting in transporting electricity generated by an offshore wind farm to land, the offshore substation topside being supported by an offshore support structure and comprising a first set of gas insulated switch gears, GIS, a second set of GIS, and a transformer, wherein the first set of GIS are adapted to receive AC current generated by at least a part of the wind turbines of the offshore wind farm and delivering the AC current to the transformer, the transformer being configured to increase the voltage of the AC current generated by the at least part of the wind turbine and deliver the AC current with the increased voltage to the second set of GIS, the second set of GIS being configured to provide the AC current with the increased voltage to one or more export cables for transporting the AC current towards the shore, wherein the offshore substation topside further comprises a first deck and a first block arranged on the first deck, wherein the first block comprises a plurality of modules including a first module and a second module, each module of the plurality of modules comprises one or more standardized sections selected from a group of standardized section, each standardized section comprises a self-supporting frame, and wherein the first module and the second module of the plurality of modules have at least one standardized section in common.

In some embodiments the offshore substation topside further comprises a second block arranged on the first deck, wherein the first block comprises a first group of modules comprising standardized sections selected from a first subgroup of standardized sections, the second block comprises a second group of modules comprising standardized section selected from a second subgroup of standardized sections, and wherein the first set of GIS are being arranged inside the second group of modules of the second block and the second set of GIS are being arranged inside the first group of modules of the first block.

In some embodiments the first block comprises a first standardized interface module configured to interface with a group of central systems and thereby provide connectivity for subsystems of the plurality of modules to the central systems.

In some embodiment the first module and the second module each comprises a ventilation subsystem for providing ventilation to the modules, the ventilation subsystem comprises a main ventilation tube extending along a first common central axis, the main ventilation tube of the ventilation subsystem of the first module having an inlet and an outlet, the main ventilation tube of the ventilation subsystem of the second module having an inlet, and wherein the inlet of the main ventilation tube of the ventilation subsystem of the second module is connected to the outlet of the main ventilation tube of the ventilation subsystem of the first module.

In some embodiments the first module is being arranged adjacent to the first standardized interface module, the first standardized interface module comprising a main ventilation tube having an inlet connected to a ventilation tube of a central ventilation system of the offshore substation topside and an outlet connected to the inlet of the main ventilation tube of the ventilation subsystem of the first module.

In some embodiments the first module and the second module comprise an electrical subsystem for providing electricity to equipment arranged in the modules, the electrical subsystem of the first module comprises a first main electrical connector and a second main electrical connector, the electrical subsystem of the second module comprises a first main electrical connector, wherein first main electrical connector and the second main electrical connector of the first module and the first main electrical connector of the second module are arranged along a second common central axis and the second main electrical connector of the first module is being connected electrically to the first main electrical connector of the second module.

In some embodiments the first standardized interface module comprises an electrical subsystem connected to a main electrical system of the offshore substation topside, the electrical subsystem of the first standardized interface module comprises a first main electrical connector being connected to first electrical connector of the electrical subsystem of the first module.

In some embodiment the first module and the second module each comprises a fire extinguishing subsystem for extinguishing fires in the modules, the fire extinguishing subsystem comprises a fire pipe for transporting a fire extinguishing fluid, the fire pipe extending along a fifth common central axis, the fire pipe of the fire extinguishing subsystem of the first module having an inlet and an outlet, the fire pipe of the fire extinguishing subsystem of the second module having an inlet, and wherein the inlet of the fire pipe of the fire extinguishing subsystem of the second module is connected to the outlet of the fire pipe of the fire extinguishing subsystem of the first module.

In some embodiments, the first standardized interface module comprises a fire pipe fluidly connected to a tank of fire extinguishing fluid of the offshore substation topside, the fire pipe having an outlet, and wherein the outlet is connected to the inlet of the fire pipe of the first module.

In some embodiments the fire extinguishing subsystem of the first module and the second module each comprises a fire detector communicatively coupled to a central fire control unit, wherein the fire control unit is configured to, responsive to a fire detected by one or more fire detectors, take an action to extinguishing the fire and / or prevent it from spreading.

In some embodiments the ventilation subsystem of the first module and second module each comprises a valve communicatively coupled to the central fire control unit, and wherein the central fire control unit is further configured to detect the location of a fire and responsive to the detected location close valves of one or more ventilation subsystems to stop ventilation of modules being in fire.

In some embodiments the plurality of module of the first block further comprises a third module and a fourth module, the third and the fourth module each having at least one standardized section in common, and wherein the third module is arranged on top of the first module, and the fourth module is arranged on top of the second module, the self-supporting frames of the standardized sections of first module being further configured to support the weight of the third module, and the self-supporting frames of the standardized sections of the second module being further configured to carry the weight of the fourth module.

In some embodiments the first block further comprises a second standardized interface module, the second standardized interface module being arranged on top of the first standardized interface module and being configured to interface with the first standardized interface module.

According to a third aspect the invention relates to use of an offshore substation topside manufactured as disclosed in relation to the first aspect for assisting in transporting electricity generated by an offshore wind farm towards land.

The different aspects of the present invention can be implemented in different ways including methods of manufacturing an offshore substation topside and offshore substation topsides described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependant claims. Furthermore, it will be appreciated that embodiments described in connection with one of the aspects described herein may equally be applied to the other aspects.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1 shows a schematic view of an offshore substation platform according to an embodiment of the present invention.
Fig. 2 shows schematically an offshore substation topside according to an embodiment of the present invention.
Fig. 3a shows a schematic drawing of a group of standardized sections seen from the side according to an embodiment of the present invention.
Fig. 3b shows a schematic drawing of modules assembled by the group of standardized sections shown in Fig. 3a.
Fig. 4 shows a schematic drawing of a module according to an embodiment of the present invention.
Fig. 5 shows a flowchart of a method of manufacturing an offshore substation topside according to an embodiment of the present invention.

### Detailed description

In the following description, reference is made to the accompanying figures, which show by way of illustration how the invention may be practiced.

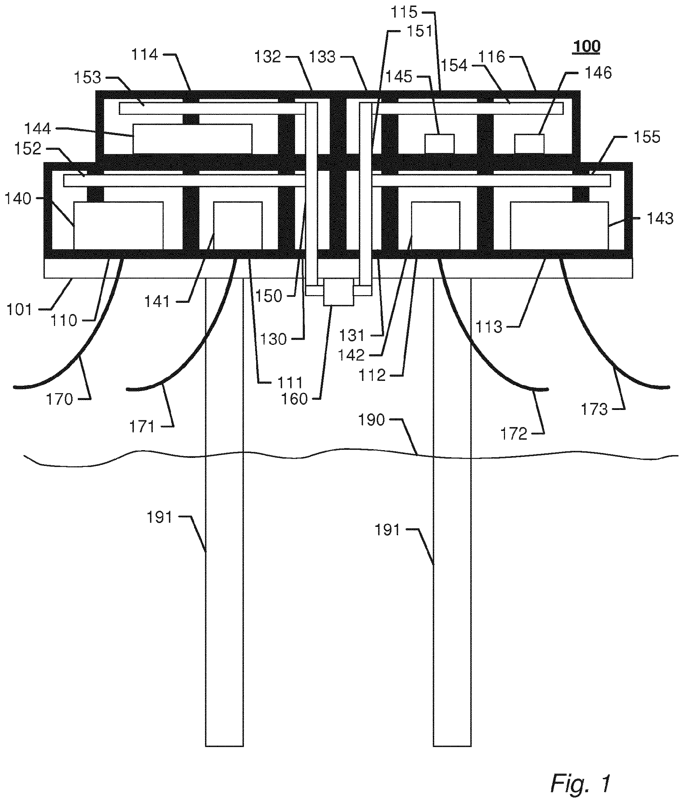

Fig. 1 shows schematically an offshore substation platform for assisting in transporting electricity generated by an offshore wind farm to land according to an embodiment of the invention. The offshore substation platform comprises an offshore substation topside and an offshore support structure. The offshore substation platform is seen from the side. The offshore substation topside being supported by the offshore support structure being a jacket 191 in this embodiment. The offshore substation comprises a first set of gas insulated switch gears, GIS 140-143, a second set of GIS (not shown), and a transformer (not shown), wherein the first set of GIS 140-143 are adapted to receive AC current generated by at least a part of the wind turbines of the offshore wind farm and deliver the AC current to the transformer, the transformer being configured to increase the voltage of the AC current generated by the at least part of the wind turbine and deliver the AC current with the increased voltage to the second set of GIS. The second set of GIS being configured to provide the AC current with the increased voltage to one or more export cables for transporting the AC current towards the shore. The offshore substation topside further comprises a first deck 101 and a first block 100 arranged on the first deck 101. The first block 100 comprises a plurality of modules 110-116 including a first module 110, a second module 111, a third module 112, a fourth module 113, a fifth module 114, a sixth module 115, and a seventh module 116. Each module of the plurality of modules 110-116 comprises one or more standardized sections selected from a group of standardized sections, each standardized section comprises a self-supporting frame. In this embodiment, the first module 110, the fourth module 113 and the fifth module 114 each have two standardized sections, and the second module 111, the third module 112, sixth module 115, and the seventh module 116 each have a single standardized section. In this embodiment, the first module 110, the second module 111, the third module 112, and the fourth module 113 have one standardized section in common, and the first module 110 and the fourth module 113 have two standardized sections in common. Correspondingly, the fifth module, the sixth module 115 and the seventh module 116 have one standardized section in common. In this embodiment a first GIS 140 of the first set of GIS is arranged inside the first module 110, a second GIS 141 of the first set of GIS is arranged inside the second module 111, a third GIS 142 of the first set of GIS is arranged inside the third module 112, and a fourth GIS 143 of the first set of GIS is arranged inside the fourth module 113. Each GIS of the first group of GIS 140-143 is connected to a plurality of offshore wind turbines via their respective cable 170-173. In this embodiment, the first GIS 140 and the fourth GIS 143 are larger than the second GIS 141 and the third GIS 142. Thus, the first GIS 140 and the fourth GIS 143 may be connected to more offshore wind turbines and / or larger offshore wind turbines than the second GIS 141 and the third GIS 142. However, in other embodiment all GIS of the first group of GIS may be of equal size. In this embodiment, the fifth, sixth and seventh module 114-116, are arranged on top of the first, second, third and fourth module 110-113. Thus, the self-supporting frame of the standardized sections of the first, second, third and fourth module 110-113 is further adapted to support a module arranged on top of it. The fifth, sixth and seventh module 114-116 may house SCADA equipment 144 or the like. The first block 100 comprises further four standardized interface modules 130-133. The standardized interface modules 130-133 are configured to interface with a group of central systems 160 and thereby provide connectivity for subsystems of the modules 110-116 to the central systems 160. The central systems may comprise a ventilation system for providing ventilation and / or an electrical system for providing electricity to equipment in the plurality of modules 110-116. By providing the first block with interface modules 130-133 the remaining modules may be further standardized as there is no need to adapt their subsystems to the central systems of the offshore substation topside. The standardized interface modules 130-133 may be provided with ventilation tubes and / or electrical cables 150-151 for providing the connectivity. Correspondingly, the modules 110-116 may be provided with ventilation tubes and / or electrical cables 152-153 configured to receive air and / or electricity from the standardized interface modules 130-133.

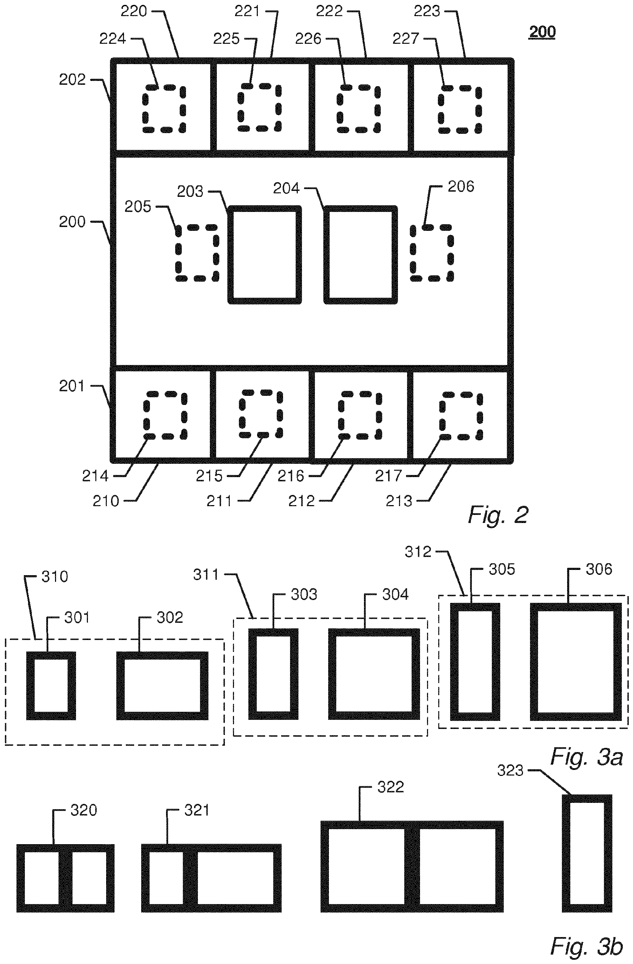

Fig. 2 shows schematically an offshore substation topside 200 according to an embodiment of the present invention. The offshore substation topside 200 is seen from the top. The offshore substation topside comprises a first block 201 and a second block 202. The first block 201 comprises four modules 210-213 where each module comprises one or more standardized sections (not shown). Correspondingly, the second block 202 comprises four modules 220-223 where each module comprises one or more standardized sections (not shown). The offshore substation topside 200 comprises a first set of GIS 214-217, a second set of GIS 224-227, and two transformers 203-204. The first set of GIS 214/217 is arranged inside the modules 210-213 of the first block 201 and is adapted to receive AC current generated by at least a part of the wind turbines of an offshore wind farm and further deliver the AC current to the two transformers 203-204. The two transformers 203-204 are arranged outside and are configured to increase the voltage of the AC current generated by the at least part of the wind turbine and deliver the AC current with the increased voltage to the second set of GIS 224-227. The second set of GIS 224-227 is arranged inside the modules 220-223 of the second block 202 and is configured to provide the AC current with the increased voltage to one or more export cables for transporting the AC current towards the shore. The offshore substation topside 200 may further comprise a shunt reactor 205 and a shunt reactor transformer 206.

Fig. 3a shows a schematic drawing of a group of standardized sections seen from the side according to an embodiment of the invention. The group of standardized sections comprises a first subgroup of standardized sections 312 having a first height, a second group of standardized section 311 having a second height, and a third subgroup of standardized sections 310 having a third height. In this embodiment the first subgroup 312 comprises two standardized sections 305-306, the second subgroup 311 comprises two standardized sections 303-304, and the third subgroup 310 comprises two standardized sections 301-302. The first height may be higher than the second height, and the second height is higher than the third height. As an example the first height may be between 5.8 and 6.7 meter e.g. 6.2 meter, the second height may be between 4.7 and 5.7 meter e.g. 5.2 meter, and the third height may be between 3.5 and 4.5 meter e.g. 4.0 meter. The first group of standardized sections may be adapted for forming modules suitable for housing high voltage, HV GIS e.g. GIS capable of handling voltages at or above 120 kV. The second group of standardized sections may be adapted for forming modules suitable for housing medium voltage, MV GIS e.g. GIS capable of handling voltages between 20 - 120 kV. The third group of standardized sections may be adapted for forming modules suitable for housing low voltage, LV, equipment such as SCADA equipment.

Fig. 3b shows a schematic drawing of modules assembled by the group of standardized sections shown in Fig. 3a. Shown is a first module 320, a second module 321, a third module 322, and a fourth module 323. The first module 320 has two identical sections 301 selected from the third subgroup 310, the second module has a first section 301 and a second section 302 selected from the third subgroup of sections, the third module 322 has two identical sections 304 selected from the second subgroup of sections 311, and the third module 323 has a single section 323 selected from the first subgroup of sections 312.

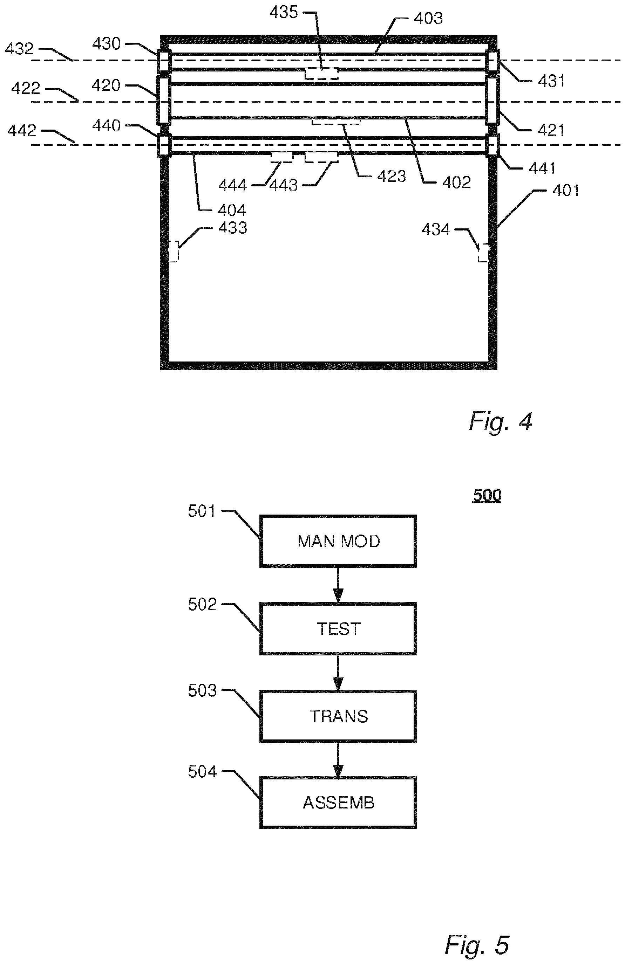

Fig. 4 shows a schematic drawing of a module 401 according to an embodiment of the invention. The module 401 has a single standardized section having a self-supporting frame i.e. a frame capable of supporting the weight of the module. Thus the module does not need any external support frame or structure. The module comprises a ventilation subsystem for providing ventilation to the module, an electrical subsystem for providing electricity to equipment in the module 401, and a fire extinguishing subsystem for extinguishing fires in the module 401. The ventilation subsystem comprises a main ventilation tube 402 extending along a first common central axis 422, the main ventilation tube 402 of the ventilation subsystem has an inlet 420 and an outlet 421. The ventilation subsystem may further comprise a ventilation outlet 423. The inlet 420 and the outlet 421 are configured to be connected to respective inlets / outlets of neighbouring modules e.g. by providing the inlet 420 and the outlet 421 with a flange or a bellow connector configured to be connected to a matching flange of a neighbouring module. The electrical subsystem comprises a first main electrical connector 430 and a second main electrical connector 431 arranged along a second common central axis 432. The electrical subsystem may further comprise one or more power outlets 433-435 e.g. for providing electricity to lightning devices, computers and other electrical devices. The fire extinguishing subsystem comprises a fire pipe 404 for transporting a fire extinguishing fluid, the fire pipe extending along a fifth common central axis 442, the fire pipe 404 of the fire extinguishing subsystem has an inlet 440 and an outlet 441. The fire extinguishing subsystem may further comprise a fire extinguishing sprinkler 443 and a fire detector 444. The inlet 440 and the outlet 441 are configured to be connected to respective inlets / outlets of neighbouring modules e.g. by providing the inlet 440 and the outlet 441 with a flange or a bellow connector configured to be connected to a matching flange of a neighbouring module. The electrical subsystem, the ventilation subsystem, and the fire extinguishing subsystem are preferably provided to the module during its manufacture, i.e. before the module is connected other modules and thereby assembled into a block. Furthermore, the electrical subsystem, the ventilation subsystem, and the fire extinguishing subsystem are preferably tested at location of or close to the location where the module 401 is manufactured e.g. away from the location where the module 401 is connected / attached to other modules to form the block. This allows any failures n subsystems of the modules to be detected before they are assembled into a block.

Fig. 5 shows a flowchart of a method of manufacturing an offshore substation topside according to an embodiment of the present invention. Firstly, in step 501 a plurality of modules is manufactured, where each module comprises one or more standardized sections. Preferably the plurality of modules is manufactured at a plurality of different locations, i.e. at different manufacturers and/or sub-suppliers. However, the plurality of modules may also be manufactured in a single factory. The plurality of modules is preferably provided with subsystems such as an electrical subsystem and / or an ventilation subsystem at the factory where they are produced. Next, in step 502 the plurality of modules is tested preferably at the factory where they have been manufactured. If the plurality of modules has been provided with subsystems then these subsystems may also be tested preferably at the factory where they are produced. This is done to make the assembly of the plurality of modules as simple and secure as possible. Next in step 503 at least some modules of the plurality of modules are transported from the location where they were manufactured to the location where they are going to be assembled into a block e.g. by a truck or a vessel (e.g. barge). The assembly location may be a location where one or more of the plurality of modules have been manufactured or a different location, i.e. a location where no modules have been manufactured. Then in step 504 the plurality of modules is assembled into one or more blocks e.g. by welding, bolting or stabbing the modules together. If the modules are provided with subsystems then the subsystems of the modules are also connected whereby the one or more blocks may directly be provided with a fully functional electrical system and / or a fully functional ventilation system. The plurality of modules may be assembled into one or more blocks on a deck of the offshore substation topside. Alternatively, the plurality of modules may be firstly be assembled into one or more blocks and then subsequently arranged on a deck of the offshore substation topside e.g. using crane. The assembly location is preferably a location relatively close to the location of the offshore wind farm whereby the transportation time of the deck and the one or more blocks may be reduced. In a preferred embodiment, the deck is firstly arranged on the offshore support structure, and the plurality of modules is then transported to the offshore support structure e.g. by vessel and then assembled into the first block offshore directly on top of the offshore support structure. This makes it possible to install an offshore substation topside without the need of a heavy lifting vessel capable of lifting an entire topside and/or deck with one or more blocks arranged thereon. This will potentially lower the costs especially when the offshore wind farm is being built at a location where there are no nearby heavy lifting vessels available.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method of manufacturing an offshore substation topside for assisting in transporting electricity generated by an offshore wind farm to land, the offshore wind turbine farm being arranged at a first location, the offshore substation topside being supported by an offshore support structure and comprising a first set of gas insulated switch gears, GIS, a second set of GIS, and a transformer, wherein the first set of GIS are adapted to receive AC current generated by at least a part of the wind turbines of the offshore wind farm and deliver the AC current to the transformer, the transformer being configured to increase the voltage of the AC current generated by the at least part of the wind turbine and deliver the AC current with the increased voltage to the second set of GIS, the second set of GIS being configured to provide the AC current with the increased voltage to one or more export cables for transporting the AC current towards the shore, wherein the offshore substation topside further comprises a first deck and a first block arranged on the first deck, wherein the first block comprises a plurality of modules including a first module and a second module, each module of the plurality of modules comprises one or more standardized sections selected from a group of standardized sections, each standardized section comprises a self-supporting frame, and wherein the first module of the plurality of modules is manufactured at a second location, the first module and the second module of the plurality of modules having at least one standardized section in common, and the plurality of modules being assembled into the first block at a location remote from the second location.

2. A method according to claim 1, wherein the offshore substation topside further comprises a second block arranged on the first deck, wherein the first block comprises a first group of modules comprising standardized sections selected from a first subgroup of standardized sections, the second block comprises a second group of modules comprising standardized section selected from a second subgroup of standardized sections, and wherein the first set of GIS are being arranged inside the second group of modules of the second block and the second set of GIS are being arranged inside the first group of modules of the first block.

3. A method according to claim 2, wherein the first block further comprises a first standardized interface module configured to interface with a group of central systems and thereby provide connectivity for subsystems of the plurality of modules to the central systems.

4. A method according to claim 3, wherein the first module and the second module each comprises a ventilation subsystem for providing ventilation to the modules, the ventilation subsystem comprises a main ventilation tube extending along a first common central axis, the main ventilation tube of the ventilation subsystem of the first module having an inlet and an outlet, the main ventilation tube of the ventilation subsystem of the second module having an inlet, and wherein the inlet of the main ventilation tube of the ventilation subsystem of the second module is being connected to the outlet of the main ventilation tube of the ventilation subsystem of the first module when the plurality of modules is being assembled into the first block.

5. A method according to claim 4, wherein the first module is being arranged adjacent to the first standardized interface module, the first standardized interface module comprising a main ventilation tube having an inlet connected to a ventilation tube of a central ventilation system of the offshore substation topside and an outlet connected to the inlet of the main ventilation tube of the ventilation subsystem of the first module.

6. A method according to claims 4 or 5, wherein prior to assembly of the first module and the second module, the ventilation subsystem of the first module is tested at the first location and the ventilation subsystem of the second module is tested at another location different from the first location.

7. A method according to any one of claims 3 to 6, wherein the first module and the second module comprise an electrical subsystem for providing electricity to equipment arranged in the modules, the electrical subsystem of the first module comprises a first main electrical connector and a second main electrical connector, the electrical subsystem of the second module comprises a first main electrical connector, wherein first main electrical connector and the second main electrical connector of the first module and the first main electrical connector of the second module are arranged along a second common central axis and the second main electrical connector of the first module is being connected electrically to the first main electrical connector of the second module when the plurality of modules is being assembled into the first block.

8. A method according to claim 7, wherein the first standardized interface module comprises an electrical subsystem connected to a main electrical system of the offshore substation topside, the electrical subsystem of the first standardized interface module comprises a first main electrical connector being connected to first electrical connector of the electrical subsystem of the first module when the plurality of modules is being assembled into the first block.

9. A method according to claims 7 or 8, wherein prior to assembly of the first module and the second module, the electrical subsystem of the first module is tested at the first location and the electrical subsystem of the second module is tested at another location different from the first location.

10. A method according to any one of claims 3 to 9, the plurality of module of the first block further comprises a third module and a fourth module, the third and the fourth module each having at least one standardized section in common, and wherein the third module is arranged on top of the first module, and the fourth module is arranged on top of the second module, the self-supporting frames of the standardized sections of first module being further configured to support the weight of the third module, and the self-supporting frames of the standardized sections of the second module being further configured to carry the weight of the fourth module.

11. A method according to claims 10, wherein the first block further comprises a second standardized interface module, the second standardized interface module being arranged on top of the first standardized interface module and being configured to interface with the first standardized interface module.

12. A method according to any one of claims 1 to 11, wherein the plurality of modules is being assembled into the first block at a location more proximal to the first location than the second location.

13. A method according to claim 12, wherein the first deck is arranged on the offshore support structure before the first block is arranged on the first deck.

14. A method according to claim 13, wherein the plurality of modules is being transported by one or more vessels to the offshore support structure and assembled into the first block offshore on the first deck at the offshore support structure.

15. An offshore substation topside for assisting in transporting electricity generated by an offshore wind farm to land, the offshore substation topside being supported by an offshore support structure and comprising a first set of gas insulated switch gears, GIS, a second set of GIS, and a transformer, wherein the first set of GIS are adapted to receive AC current generated by at least a part of the wind turbines of the offshore wind farm and deliver the AC current to the transformer, the transformer being configured to increase the voltage of the AC current generated by the at least part of the wind turbine and deliver the AC current with the increased voltage to the second set of GIS, the second set of GIS being configured to provide the AC current with the increased voltage to one or more export cables for transporting the AC current towards the shore, wherein the offshore substation topside further comprises a first deck and a first block arranged on the first deck, wherein the first block comprises a plurality of modules including a first module and a second module, each module of the plurality of modules comprises one or more standardized sections selected from a group of standardized section, each standardized section comprises a self-supporting frame, and wherein the first module and the second module of the plurality of modules have at least one standardized section in common.
